# EUROPEAN PATENT APPLICATION

(11) **EP 4 369 468 A1**
(43) Date of publication of application: **15.05.2024**
(21) Application number: 22206415.6
(22) Date of filing: 09.11.2022
(51) Int. Cl.: H01M 10/42, H01M 50/251, H01M 50/262

(54) **ANTI-THEFT SYSTEM FOR BATTERY RACK**

(71) Applicant: Polarium Energy Solutions AB, 113 63 Stockholm (SE)
(72) Inventor: HILDING, Kim, 164 40 Kista (SE)
(74) Representative: AWA Sweden AB

(57) **Abstract**

A locking system (100) for a battery arrangement is provided. The battery arrangement comprises at least one battery module (102) arranged in a battery stack (104). The battery stack has a first end (A), a second end (B), a frontside (C) and a second side (D). The locking system comprises a lockable box (112) configured to be attached at the first end of the battery stack. The lockable box comprises an exit cable guide (114) and an entrance cable guide (116). The locking system further comprises a cable track (120) comprising the exit cable guide, the entrance cable guide, and at least one module cable guide (120) configured to be attached to of the at least one battery module at the second side of the battery stack. The cable track starts and ends in the lockable box. The locking system further comprises a cable (330) configured to be inserted into the lockable box and through the cable track such that a first end and a second end of the cable are located inside the lockable box. The locking system further comprises a cable lock (332) configured to lock the first end and the second end of the cable together inside the lockable box.

## Description

### Technical field

The present disclosure relates generally to the field of battery installations. More specifically, it relates to an anti-theft system for a battery arrangement.

### Background

Battery modules are used for many applications all over the world, often as backup power for essential equipment. In many applications, battery modules may be installed in remote areas without constant surveillance. Battery modules often comprise rare or expensive metals. The expensive components, as well as their power storing ability, make battery modules valuable and subject to theft.

Battery modules are usually arranged as a rack (or stack) and placed in thick-walled security cabinets. However, security cabinets have weak points, such as hinges, doors etc., which make it possible to break into the cabinets and access the modules. In order to increase security, prior solutions exist in which the modules are, e.g., welded, bolted, or locked to the rack or to each other, or in which further protective plates are fastened to the rack. However, a common issue with prior art solutions is that they increase the difficulty of accessing the battery modules also for authorized personnel, for example when repairing or replacing a battery module. Performing welding operations near battery modules may also present safety risks. Therefore, improved security solutions for battery installations are needed.

### Summary

It is therefore an object of the present disclosure to overcome at least some of the above-mentioned drawbacks, and to provide improved anti-theft solutions for battery racks. This and other objects are achieved by means of a locking system as defined in the appended independent claim. Other embodiments are provided by the dependent claims.

According to a first aspect of the present disclosure, a locking system for a battery arrangement is provided. The battery arrangement comprises at least one battery module arranged in a battery stack. The battery stack has a first end, a second end, a frontside and a second side. The locking system comprises a lockable box configured to be attached at the first end of the battery stack. The lockable box comprises an exit cable guide and an entrance cable guide. The locking system further comprises a cable track. The cable track comprises the exit cable guide, the entrance cable guide and at least one module cable guide configured to be attached each of the at least one battery module at the second side of the battery stack. The cable track starts and ends in the lockable box. The locking system further comprises a cable. The cable is configured to be inserted into the lockable box and through the cable guide such that a first end and a second end of the cable are located inside the lockable box. The locking system further comprises a cable lock configured to lock the first end and the second end of the cable together inside the lockable box.

A goal with security and locking systems may be to increase the difficulty of unauthorized removal of the protected item, and to prolong the time necessary for such removal.

The lockable box may prevent access to the cable and the cable lock when in a closed (locked) state. Hence, as with the present locking system the battery modules are attached together through the cable inserted in the cable track, preventing access to the cable and the cable lock also prevent access to (or theft of) an individual battery module. In other words, the locking system may lock the battery module(s) together with the lockable box via the cable, which may render removal of an individual module more difficult. Further, battery modules are usually heavy, which means that moving more than one module at a time can be very difficult. At the same time, with the present locking system, a person having a key to the lockable box and the cable lock may easily remove the cable to separate the modules from each other.

The cable guides may guide the cable (or wire rope, chord, string, or strand made of a flexible but durable material) through the entire cable track for easy installation. The cable guides may also cover at least portions of the cable to make it more difficult for unauthorized people to access and tamper with the cable. For example, a cable guide may be in the form of a pipe through which a cable may be led/pushed.

A side of a battery module corresponding to the second side of the battery stack may be referred to as the second side of the battery module. When the battery module is arranged in the battery stack, the second side of the battery module may coincide with the second side of the battery stack.

The second side of the battery stack is different from the front side. Rather, the second side may be a lateral side or a backside of the stack. As such, the cable may be more difficult to access, and thus more difficult to tamper with than a locking system arranged on the front of the stack. However, the lockable box may be arranged such that the cable may be inserted from the front of the stack for easy installation by authorized personnel.

According to some embodiments, the cable track may comprise a U-shaped module cable guide. The U-shaped module cable guide may be configured to be attached to a battery module at the second end of the battery stack.

In other words, the U-shaped module cable guide may be configured to be attached to a battery module which is arranged furthest from the lockable box arranged at the first end of the battery stack.

When installed in a battery arrangement, the U-shaped cable guide may receive the cable in a first direction at a first end of the U-shaped cable guide. The curvature of the U-shaped cable guide may change the direction of the cable and present the cable to the subsequent cable guide at a second end of the U-shaped cable guide in a second, different, direction. The second direction may be opposite to the first direction. The U-shaped cable guide may also be referred to as a U-turn cable guide.

According to some embodiments, the battery stack may comprise a battery module at the second end of the battery stack, and at least one intermediate battery module arranged between the lockable box and the battery module at the second end. The cable track may comprise, for each intermediate battery module, a first module cable guide and a second module cable guide, both configured to be attached to (the second side of) the intermediate battery module, at the second side of the battery stack.

The term cable guide may refer to an exit cable guide, entrance cable guide and any type of module cable guide.

The term module cable guide may refer to any cable guide configured to be mounted to the second side of a battery module. For example, a module cable guide may be a first module cable guide, a second module cable guide or a U-shaped cable guide.

According to some embodiments, the cable track may further comprise at least one connector configured to connect two neighbouring cable guides to form a continuous cable track.

A connector may connect module cable guides of two adjacent battery modules. For example, a connector may connect a module cable guide of an intermediate battery module with a U-turn cable guide of the battery module at the second end of the stack. A connector may also connect the exit or entrance cable guide with a module cable guide of a battery module adjacent to the lockable box.

A connector may form part of a cable guide, such as a module cable guide. Alternatively, a connector may be a separate element. A connector may engage with one or two cable guides.

According to some embodiments, the second side of the battery stack may be the backside of the battery stack.

Thus, the second side of a battery module may be the backside of the battery module.

Battery stacks are often arranged inside a cabinet or with its backside toward a wall. Arranging the cable guides of the locking system on the backside of the battery stack may further increase the difficulty for unauthorized people to access and tamper with the cable.

According to some embodiments, each of the at least one module cable guide may form part of a plate configured to be attached to (the second side of) a battery module at the second side of the battery stack.

A first module cable guide and a second module cable guide may be part of a same plate. Alternatively, the first and the second module cable guide may be part of different plates.

A plate may be easily fastened, using e.g., screws, to the second side of a battery module. The plate may be fastened to the battery module prior to the arrangement of the battery module in the stack. The plate may at least partially cover the cable to further limit access to the cable from the outside.

According to some embodiments, the plate may be a backplate comprising an extension configured to extend behind a neighboring battery module.

The backplate may be configured to be attached/fastened to a backside of a battery module.

The extension may prevent removal of the battery module to which the backplate is attached when the neighboring battery module has been installed, thus further preventing unauthorized removal of battery modules.

For example, if the extension extends in an upwards direction, the extension may prevent removal of the battery module when another battery module has been installed directly above. In such a battery arrangement, the battery modules may be installed from the bottom up and removed from the top down.

According to some embodiments, the locking system may further comprise at least one fastening plate. The fastening plate may be configured to engage with a plate, and to be fastened to an immobile object beside the battery stack.

The fastening plate may engage with a plate (e.g., a backplate) to fasten a battery module to the immobile object. The immobile object may, e.g., be a sidewall or a backwall of a security cabinet or an electronics cabinet, it may be a battery rack or battery cabinet or another object.

According to some embodiments, at least a side of the lockable box may comprise a hardened steel plate.

The hardened steel plate may for example act as a cover for the lockable box. The hardened steel plate may further prevent unauthorized access into the lockable box.

According to some embodiments, the lockable box may further comprise an opening in a wall of said lockable box, the opening being configured to accommodate the insertion of the cable into the cable track and the locking together of the first end and the second end of the cable. The lockable box may further comprise a removable lock unit configured to close the opening and, in a locked state, to seal the opening.

The removable lock unit may therefore, in the locked state, prevent access to the inside of the lockable box and thereby to the cable and cable lock. The opening and the removable lock unit may remove the need of hinges and minimize the weak areas of the lockable box, to further prevent unauthorized access.

According to some embodiments, the lockable box may be configured to be arranged on top of the battery stack.

In other words, the first end of the battery stack may be the top of the battery stack. The second end of the battery stack may be the bottom of the battery stack. Battery arrangements or stacks often comprise a plurality of battery modules stacked one on top of another.

According to some embodiments, a maximum distance between neighboring cable guides may be smaller than twice the width of the cable.

If the gap between neighboring cable guides is small enough in relation to the width/diameter of the cable, the cable may easily continue into the next cable guide.

According to a second aspect, a battery arrangement is provided. The battery arrangement comprises at least one battery module arranged in a stack having a first end and a second end, a front side and a second side. The battery arrangement further comprises a locking system as described above with reference to the first aspect.

The at least one module cable guide of the locking system may be attached to the second side of the at least one battery module.

According to some embodiments, the at least one battery module may be arranged in a rack.

According to some embodiments, the battery arrangement may further comprise a security cabinet in which the battery stack and the locking system are arranged.

A security cabinet may for example comprise thick or hardened steel plates, which may increase the difficulty of cutting into the cabinet. Different combinations of materials arranged in a multi-layered or sandwiched design, such as sand filled epoxy resin between two metal sheets, may further prevent drilling.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 is a schematic illustration of a battery arrangement and a locking system, in accordance with some embodiments;
Figure 2 is a schematic illustration of a lockable box, in accordance with some embodiments;
Figure 3 is a schematic illustration of part of a lockable box with a cable and a cable lock, in accordance with some embodiments;
Figure 4 is a schematic illustration of a battery module on which a backplate is arranged, in accordance with some embodiments;
Figure 5 is a schematic illustration of a backplate, in accordance with some embodiments;
Figure 6 is a schematic illustration of a backplate having a U-shaped module cable guide, in accordance with some embodiments;
Figure 7 is a schematic illustration of a fastening plate engaging with a backplate arranged on a battery module, in accordance with some embodiments;
Figure 8 is a schematic illustration of a battery arrangement comprising a plurality of battery modules arranged in a rack, in accordance with some embodiments; and
Figure 9 is a schematic illustration of a battery arrangement including a security cabinet, in accordance with some embodiments.

As illustrated in the figures, the sizes of the elements and regions may be exaggerated for illustrative purposes and, thus, are provided to illustrate the general structures of the embodiments.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

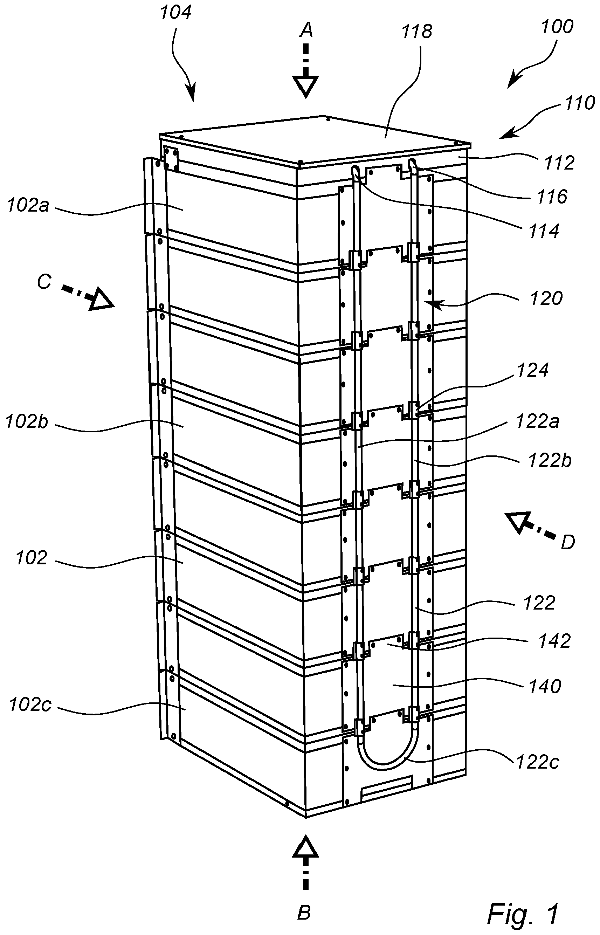

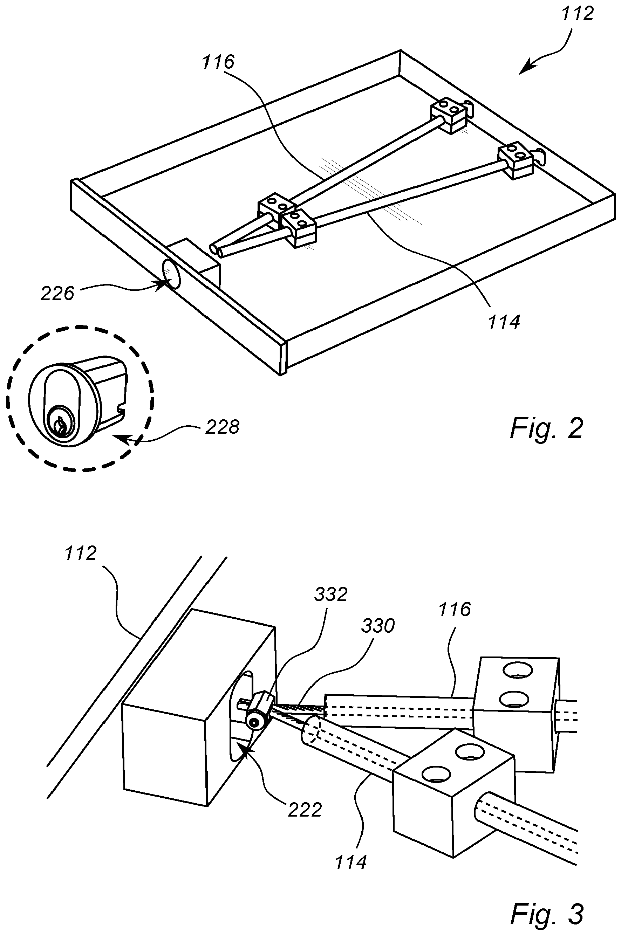

In the following text, like numerals refer to features which may have corresponding or equivalent effects or purposes. References are made up by a first number indicating in which figure the feature is first illustrated, followed by a feature number. For example, the battery modules, which are illustrated in Figure 1, have the reference 102, while the cable, which is first illustrated in Figure 3, has the reference 330. A specific example or a version of a feature may be indicated by a suffix, such as the first battery module 102a, and the intermediate battery module 102b.

With reference to Figure 1, a battery arrangement 100 and a locking system 110, in accordance with some embodiments, will be described.

The battery arrangement 100 comprises a plurality of battery modules 102 arranged in a stack 104. The stack 104 has a first end A, a second end B, a frontside C and a second side D. In the present example, the first end A is the top, the second end B is the bottom, and the second side D is the back of the stack 104. In Figure 1, three battery modules are specifically identified, a first battery module 102a is arranged at the top (first end A) of the stack 104, a second battery module 102c is arranged at the bottom (second end B) of the stack 104, and an intermediate module 102b is arranged in the stack 104 between the first module 102a and the second battery module 102c.

The battery arrangement 100 further comprises a locking system 110. In Figure 1, the locking system 110 is arranged and fastened to the battery stack 104 such that the battery modules 102 are locked together.

The locking system 110 comprises a lockable box 112 arranged on top (at the first end A) of the battery stack 104. The lockable box 112 may be fastened to the first battery module 102a. The lockable box has a top plate 118 which may comprise a hardened steel plate. The locking system 110 further comprises a cable track 120 comprising a plurality of cable guides 114, 116, 122 through which a cable (not depicted in Figure 1) is inserted/led/pushed. The cable track 120 starts and ends inside the lockable box 112, such that the end portions of the cable may be locked together inside the lockable box 112.

Each of the modules 102 of the battery stack 104 has at least one module cable guide 122 attached. When the cable is run through the cable track 120 and its ends locked together, the cable connects the modules 102 to each other. As the modules are often heavy, it is difficult to move the entire stack at once. At the same time, a person having the right keys may easily open the lockable box 112 and unlock the cable ends to remove the wire (cable) and extract/replace one or more modules 102.

Figures 2 and 3 illustrate examples of interiors of the lockable box 112. Reference will now be made to Figures 1-3.

The cable 330 may be inserted into an exit cable guide 114, starting inside the lockable box 112, and leading out through the second side D (backside) of the lockable box 112. The cable may further be guided, by the cable guides 122, 122a-c, along each module 102, and back into the lockable box 112 via an entrance cable guide 116. Inside the lockable box 112, the end portions of the cable 330 may be locked together using a cable lock 332.

The lockable box 112 may comprise an opening 226. A shape and size of the opening 226 may be configured such that the insertion of the cable 330 in the cable track 120, and the locking together of the end portions of the cable, may be performed through the opening 226. A removable lock unit 228, as shown enlarged in Figure 2, may be configured to be inserted into the opening 226. The removable lock unit 228 may be locked into place to prevent access to the inside of the lockable box 112. As an alternative to the opening 226 and the removable lock unit 228, the lockable box 112 may comprise a lockable hatch or a door.

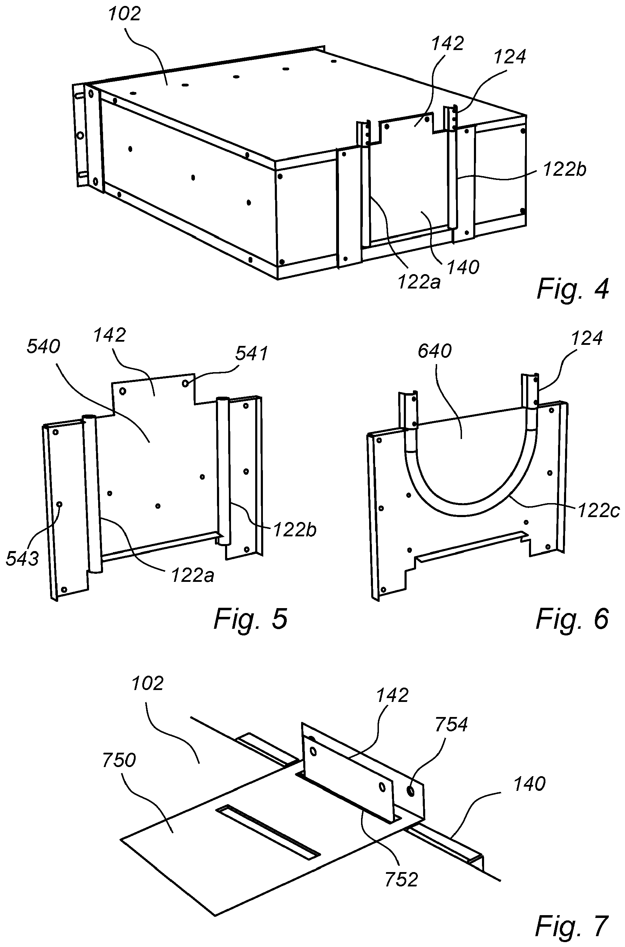

Figure 4 illustrates a battery module 102, viewed from the back, to which a backplate 140 is attached. Figures 5 and 6 illustrate examples of backplates 540, 640. Reference will now be made to Figures 1, and 4-6.

The cable track 120, comprises the exit cable guide 114, the entrance cable guide 116, and a plurality of module cable guides 122. The module cable guides 122 are each attached to the second side D (i.e., backside in Figure 1) of a battery module 102. The module cable guides 122 of adjacent battery modules 102 are aligned to form the cable track 120. The module cable guides 122 are arranged and adapted to receive the cable from a cable guide 122 of an adjacent battery module 102 (or lockable box 112) at one end, and to provide the cable to a cable guide 122 of an adjacent battery module 102 (or lockable box 112) at the other end. The length and/or positioning of the module cable guides 122 may be adapted to lead the cable into the next cable guide. For example, a space between adjacent module cable guides may be adapted based on a thickness/diameter of the cable. Connectors 124 may be arranged to connect adjacent cable guides 122. A connector 124 may cover a gap between adjacent cable guides 122. The connector 124 may lead the cable into the next cable guide 122. Further, the connector 124 may cover the cable and shield it from tampering.

The first battery module 102a, and the intermediate battery modules 102b, are each arranged with a first module cable guide 122a and a second module cable guide 122b. The first (module) cable guide 122a of the first battery module 102a receives the cable from the exit cable guide 114 and provides the cable to the first cable guide 122a of the next battery module 102. The plurality of first cable guides 102a thus guides the cable along each of the plurality of battery modules 102 in a (downward) direction away from the lockable box 112. At the bottommost battery module 102n, a U-shaped cable guide 122c is attached. The U-shaped cable guide 122c receives the cable from the first cable guide 122a of the battery module 102 above the bottommost battery module 102n. The U-shaped cable guide 122c guides the cable to turn upwards and provides the cable to the second (module) cable guide 122b of the battery module 102 above the bottommost battery module 102n. The plurality of second cable guides 102b guides the cable along each of the plurality of battery modules 102 in an (upward) direction towards the lockable box 112. The second cable guide 122b of the first battery module 102a finally provides the cable to the entrance cable guide 116.

In the illustrated embodiments, the module cable guides 122 form part of plates, namely backplates 140, 540, 640, which are configured to be attached to the second side of the battery modules 102. For example, the backplates 140, 540, 640 may comprise holes 543 for, e.g., screwing the backplate 540 onto a module. It will, however, be appreciated that module cable guides 122 may be individually fastened to the second side D of a battery module 102. Further, in other embodiments, the second side may be a lateral side of the stack 104. In such embodiments, the plates may be configured to be attached to the corresponding lateral side of the battery modules.

As is illustrated in Figures 1, 4 and 5, the backplate 140, 540 may comprise an extension 142. The extension 142 may be configured to extend behind a neighbouring battery module 102 in the stack 104, or behind the lockable box 112, as is illustrated in Figure 1. When the above battery module 102 has been installed, the lower battery module 102 cannot be pulled out from the frontside C. The extension 142 may also comprise one or more holes 541. Using the holes 541, the backplate 540 may be attached to an immobile object behind the module 12 when the module 102 has been installed.

As is illustrated in Figure 6, some backplates 640 may not comprise an extension 142. For some backplates 640, the connectors 124 may be attached to, or form part of the backplate 640 itself. In such embodiments, the connectors 124 may act as an extension 142 by extending behind a neighbouring battery module 102, as is also illustrated in Figure 4. Figure 5, on the other hand, illustrates a backplate 540 without connectors 124. Such embodiments may be used together with connectors 124 formed as separate elements.

Figure 7 is an illustration of a fastening plate 750 engaging with a backplate 140. The fastening plate 750 comprises an opening 752. The fastening plate 750 can be placed on a battery module 102, such that an extension 142 extends through the opening 752 of the fastening plate 750. The fastening plate further comprises holes 754, using which the fastening plate may be fastened to an immobile object behind the battery module 102. For example, the immobile object may be a wall of a security cabinet 908, which will be described in further detail below.

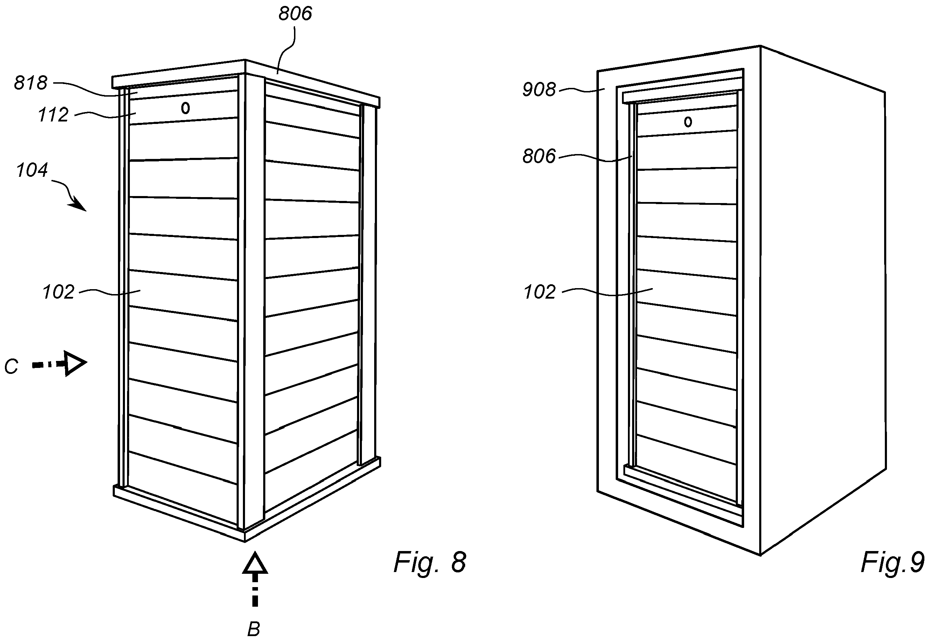

Figure 8 illustrates a battery arrangement in which a battery module stack 104 is arranged in a rack 806.

In Figure 8, a plurality of battery modules 102 are arranged as a stack 104 in a rack 806. The battery modules 102 may be inserted from the front C of the rack 806. On top of the rack is a lockable box 112, as described above with reference to the preceding embodiments. On the back of the stack 104 is a cable track 120, as described above with reference to Figure 1.

When the battery modules 102 are arranged in the stack 104, the lockable box 112 may be opened, and the cable 330 (illustrated in Figure 3) inserted into the cable track 120. After locking together the ends of the cable 330, securing the battery modules 102 to each other, the lockable box 112 may be locked. The cable 330 may then be covered by the lockable box 112 and the cable track 120, which may prevent tampering with the cable 330. The arrangement of the cable track 120 at the back of the stack 104 may further obstruct access to the cable if the battery rack 806 is, e.g., arranged with its back close to a wall.

In Figure 8, the height of the top plate 818 of the lockable box 112 has been adapted to the available space above the battery stack 104 inside the rack 806. The top plate 818 may therefore further limit access to the cable 330 and the cable track 120 above and behind the battery stack 104.

If the battery modules 102 are fitted with backplates 140 having an extension 142 configured to extend behind the above module, such as in Figures 1 and 4, the battery modules 102 may be inserted into the rack 806 starting from the bottom B and moving upwards. When removing battery modules 102, the modules 102 are taken out (disassembled) starting from the top downwards.

Figure 9 illustrates a battery arrangement in which a battery module stack 104 is arranged in a rack 806 inside a security cabinet 908.

The security cabinet 908 may have thick walls and a lockable door (not depicted) to limit unauthorized access to the battery modules 102.

Since the cable 330 is arranged at the back of the stack 104, an unauthorized person wanting to remove the modules 102 must attack or hack into the cabinet 908 from two directions: from the back to access the cable 330, and from the front to remove the modules 102. Even if access to the back of the battery stack 104 were to be achieved, the cable track and the lockbox may cover the cable to further prevent access to the cable.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A locking system (110) for a battery arrangement comprising at least one battery module (102) arranged in a battery stack (104) having a first end (A), a second end (B), a frontside (C) and a second side (D), the locking system comprising:
a lockable box (112) configured to be attached at the first end of the battery stack, the lockable box comprising an exit cable guide (114), and an entrance cable guide (116); and
a cable track (120) comprising the exit cable guide, the entrance cable guide, and at least one module cable guide (122) configured to be attached to each of the at least one battery module at the second side of the battery stack, the cable track starting and ending in the lockable box;
a cable (330) configured to be inserted into the lockable box and through the cable track such that a first end and a second end of the cable are located inside the lockable box; and
a cable lock (332) configured to lock the first end and the second end of the cable together inside the lockable box.

2. The locking system of claim 1, wherein the cable track comprises a U-shaped module cable guide (122c) configured to be attached to a battery module (102c) at the second end of the battery stack.

3. The locking system of any of the preceding claims, wherein
the battery stack comprises a battery module (102c) at the second end of the battery stack, and at least one intermediate battery module (102b) arranged between the lockable box and the battery module at the second end and
the cable track comprises, for each intermediate battery module, a first module cable guide (122a) and a second module cable guide (122b) configured to be attached to the intermediate battery module at the second side of the battery stack.

4. The locking system of any of the preceding claims, wherein the cable track further comprises at least one connector (124) configured to connect two neighboring cable guides to form a continuous cable track.

5. The locking system of any of the preceding claims, wherein the second side is a backside.

6. The locking system of any of the preceding claims, wherein each of the at least one module cable guide forms part of a plate (140) configured to be attached to a battery module at the second side of the battery stack.

7. The locking system of claim 6, wherein the plate is a backplate comprising an extension (142) configured to extend behind a neighboring battery module.

8. The locking system of any of claims 6-7, further comprising at least one fastening plate (750) configured to engage with a plate and to be fastened to an immobile object beside the battery stack.

9. The locking system of any of the preceding claims, wherein at least a side of said lockable box comprises a hardened steel plate (118).

10. The locking system of any of the preceding claims, wherein said lockable box further comprises:
an opening (226) in a wall of said lockable box configured to accommodate the insertion of the cable into the cable track and the locking together of the first end and the second end of the cable; and
a removable lock unit (228) configured to close the opening, and, in a locked state, to seal the opening.

11. The locking system of any of the preceding claims, wherein said lockable box is configured to be arranged on top of said battery stack.

12. The locking system of any of the preceding claims, wherein a maximum distance between neighboring cable guides is smaller than 2 times a width/diameter of the cable.

13. A battery arrangement (100) comprising:
At least one battery module arranged in a stack having a first end and a second end, a front side and a second side; and
a locking system in accordance with any of claims 1-12.

14. The battery arrangement of claim 13, wherein said at least one battery module is arranged in a rack (806).

15. The battery arrangement of any of claims 13-14, further comprising a security cabinet (908) in which the battery stack and the locking system is arranged.
